# EUROPEAN PATENT APPLICATION

(11) **EP 4 694 245 A1**
(43) Date of publication of application: **11.02.2026**
(21) Application number: 23931450.3
(22) Date of filing: 06.04.2023
(51) Int. Cl.: H04W 8/24, H04W 74/08

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2023/086740
(87) International publication number: WO 2024/207382

(57) **Abstract**

Embodiments of the present disclosure provide an information processing method and apparatus, a communication device, and a storage medium. The information processing method is executed by a terminal and comprises: sending first information, wherein the first information is used for indicating that the terminal is a predetermined type of terminal.

## Description

### FIELD

The present disclosure relates to, but is not limited to, the field of wireless communication technologies, and in particular relates to an information processing method, an information processing apparatus, a communication device and a storage medium.

### BACKGROUND

In the field of wireless communication technologies, when terminals of different types of are scheduled, their time-frequency domain resources may be differently limited. Thus, it is impossible to reasonably schedule terminals of different types.

### SUMMARY

Embodiments of the present disclosure provide an information processing method, an information processing apparatus, a communication device and a storage medium.

A first aspect of embodiments of the present disclosure provides an information processing method, performed by a terminal and including:
sending first information, where the first information indicates that the terminal is a predetermined type of terminal.

In some embodiments, the first information includes one of:
a message 3 (MSG3) in a four-step random access procedure; or
a message A (MSGA) physical uplink shared channel (PUSCH) in a two-step random access procedure.

In some embodiments, the first information includes a logical channel identifier (LCH ID), and the LCH ID indicates the predetermined type of terminal.

In some embodiments, sending the first information includes one of:
sending the LCH ID indicating the predetermined type of terminal based on a situation in which a cell supports a terminal type;
sending a common control channel (CCCH) message corresponding to a predefined LCH ID, where the CCCH message indicates the predetermined type of terminal; or
sending a reserved LCH ID, where two code points of the reserved LCH ID indicate a first type of terminal.

In some embodiments, sending the LCH ID indicating the predetermined type of terminal based on the situation in which the cell supports the terminal type includes one of:
sending the reserved LCH ID based on the cell supporting the first type of terminal and a second type of terminal, where the two code points of the reserved LCH ID indicate the first type of terminal;
sending a CCCH message corresponding to a predefined LCH ID based on the cell supporting the first type of terminal and a second type of terminal; or
sending a predefined LCH ID based on the cell supporting the first type of terminal and not supporting a second type of terminal, where the two code points of the predefined LCH ID indicate the first type of terminal.

In some embodiments, the CCCH message carries a first request, where the first request indicates the first type of terminal; or a reserved field in a media access control (MAC) field carried by the CCCH message indicates the predetermined type of terminal.

In some embodiments, a value of the reserved field is a first value, which indicates the first type of terminal; or a value of the reserved field is a second value, which indicates the second type of terminal.

A second aspect of embodiments of the present disclosure provides an information processing method, performed by a terminal and including:
sending first information to a network device, where the first information indicates that the terminal is a first type of terminal, the first type of terminal is different from a second type of terminal, and
the first information is carried in an MSG3 in a four-step random access procedure or an MSGA PUSCH in a two-step random access procedure.

In some embodiments, in a case where a cell corresponding to the network device supports the first type of terminal and the second type of terminal, the first information includes a first LCH ID, where the first LCH ID indicates the first type of terminal, the first LCH ID is different from a second LCH ID, and the second LCH ID indicates the second type of terminal; or
in a case where a cell corresponding to the network device supports the first type of terminal but does not support the second type of terminal, the first information includes a third LCH ID, the third LCH ID indicates the first type of terminal, and the third LCH ID is identical to a second LCH ID; or
in a case where a cell corresponding to the network device supports the first type of terminal but does not support the second type of terminal, the first information includes a third LCH ID, and a first request carried in a CCCH message corresponding to the third LCH ID indicates the first type of terminal; or
in a case where a cell corresponding to the network device supports the first type of terminal but does not support the second type of terminal, the first information includes a third LCH ID, and the third LCH ID indicates the first type of terminal in a case where a value of a reserved field in an MAC subheader corresponding to a CCCH message corresponding to the third LCH ID is a first value.

In some embodiments, the first information includes a third LCH ID, a first request carried in a CCCH message corresponding to the third LCH ID indicates the first type of terminal, the third LCH ID is identical to a second LCH ID, and the second LCH ID indicates the second type of terminal; or
the first information includes a third LCH ID, and the third LCH ID indicates the first type of terminal in a case where a value of a reserved field in an MAC subheader corresponding to a CCCH message corresponding to the third LCH ID is a first value.

In some embodiments, the first information includes a first LCH ID, where the first LCH ID indicates the first type of terminal, the first LCH ID is different from a second LCH ID, and the second LCH ID indicates the second type of terminal.

A third aspect of embodiments of the present disclosure provides an information processing method, performed by a base station and including:
receiving first information, where the first information indicates that a terminal is a predetermined type of terminal.

In some embodiments, the first information includes one of:
an MSG3 in a four-step random access procedure; or
an MSGA PUSCH in a two-step random access procedure.

In some embodiments, the first information includes an LCH ID, and the LCH ID indicates the predetermined type of terminal.

In some embodiments, receiving the first information includes one of:
receiving the LCH ID indicating the predetermined type of terminal;
receiving a CCCH message corresponding to a predefined LCH ID, where the CCCH message indicates the predetermined type of terminal; or
receiving a reserved LCH ID, where two code points of the reserved LCH ID indicate a first type of terminal.

In some embodiments, receiving the LCH ID indicating the predetermined type of terminal includes one of:
receiving the reserved LCH ID, where the two code points of the reserved LCH ID indicate the first type of terminal, and the reserved LCH ID is sent by the terminal in a case of determining that a cell supports the first type of terminal and a second type of terminal;
receiving a CCCH message corresponding to a predefined LCH ID, where the predefined LCH ID is sent by the terminal in a case of determining that a cell supports the first type of terminal and a second type of terminal; or
receiving a predefined LCH ID, where two code points of the predefined LCH ID indicate the first type of terminal, and the predefined LCH ID is sent by the terminal in a case of determining that a cell supports the first type of terminal but does not support a second type of terminal.

In some embodiments, the CCCH message carries a first request, where the first request indicates the first type of terminal; or a reserved field in an MAC subheader corresponding to the CCCH message indicates the predetermined type of terminal.

In some embodiments, a value of the reserved field is a first value, which indicates the first type of terminal; or a value of the reserved field is a second value, which indicates the second type of terminal.

In some embodiments, the method further includes: sending second information to a core network element, where the second information indicates that the terminal is the predetermined type of terminal.

In some embodiments, the second information includes an initial UE message.

In some embodiments, sending the second information to the core network element includes one of:
determining, based on the first information, that the terminal is the predetermined type of terminal, and sending, to the core network element, the second information indicating that the terminal is the predetermined type of terminal;
determining, based on the first information, that the terminal is a first type of terminal, and sending, to the core network element, the second information indicating that the terminal is the first type of terminal; or
determining, based on the first information, that the terminal is a second type of terminal, and sending, to the core network element, the second information indicating that the terminal is the second type of terminal.

A fourth aspect of embodiments of the present disclosure provides an information processing method, performed by a network device and including:
receiving first information sent by a terminal, where the first information indicates that the terminal is a first type of terminal, the first type of terminal is different from a second type of terminal;
the first information is carried in an MSG3 in a four-step random access procedure or an MSGA PUSCH in a two-step random access procedure.

A fifth aspect of embodiments of the present disclosure provides an information processing apparatus, including:
a first sending module configured to send first information, where the first information indicates that the terminal is a predetermined type of terminal.

A sixth aspect of embodiments of the present disclosure provides an information processing method, performed by a terminal and including:
a second sending module configured to send first information to a network device, where the first information indicates that the terminal is a first type of terminal, the first type of terminal is different from a second type of terminal, and the first information is carried in an MSG3 in a four-step random access procedure or an MSGA PUSCH in a two-step random access procedure.

A seventh aspect of embodiments of the present disclosure provides an information processing apparatus, including:
a first receiving module configured to receive first information, where the first information indicates that the terminal is a predetermined type of terminal.

An eighth aspect of embodiments of the present disclosure provides an information processing method, performed by a terminal and including:
a second receiving module configured to receive first information sent by a terminal, where the first information indicates that the terminal is a first type of terminal, the first type of terminal is different from a second type of terminal, and the first information is carried in an MSG3 in a four-step random access procedure or an MSGA PUSCH in a two-step random access procedure.

A ninth aspect of embodiments of the present disclosure provides a communication device, including a processor, a transceiver, a memory, and an executable program stored in the memory and capable of being run by the processor, where the processor performs the information processing method provided above in the first or second aspect when running the executable program.

A tenth aspect of embodiments of the present disclosure provides a computer storage medium having stored therein an executable program that, when executed by a processor, causes the information processing method provided above in the first or second aspect to be implemented.

The technical solutions provided in the embodiments of the present disclosure may have the following beneficial effects.

In an embodiment of the present disclosure, a terminal sends first information, where the first information indicates that the terminal is a predetermined type of terminal. In this way, a base station may be informed of the type of terminal, so that the base station may determine whether the terminal is a terminal with limited time-frequency domain resources to be scheduled, which facilitates the base station to reasonably schedule the terminal.

Regarding the technical solutions provided in the embodiments of the present disclosure, it should be understood that the above general description and the following detailed description are merely illustrative and explanatory, but cannot limit the embodiments of the present disclosure.

### BRIEF DESCRIPTION OF THE DRAWINGS

The accompanying drawings, which are incorporated in and constitute a part of this specification, illustrate embodiments consistent with the present disclosure and serve to explain the principles of the embodiments of the present disclosure together with the description.
FIG. 1 is a schematic block diagram illustrating a wireless communication system according to an illustrative embodiment.
FIG. 2 is a schematic flow chart illustrating an information processing method according to an illustrative embodiment.
FIG. 3 is a schematic flow chart illustrating an information processing method according to an illustrative embodiment.
FIG. 4 is a schematic diagram illustrating a byte corresponding to an LCH ID according to an illustrative embodiment.
FIG. 5 is a schematic flow chart illustrating an information processing method according to an illustrative embodiment.
FIG. 6 is a schematic flow chart illustrating an information processing method according to an illustrative embodiment.
FIG. 7 is a schematic flow chart illustrating an information processing method according to an illustrative embodiment.
FIG. 8 is a schematic flow chart illustrating an information processing method according to an illustrative embodiment.
FIG. 9 is a schematic flow chart illustrating an information processing method according to an illustrative embodiment.
FIG. 10 is a schematic flow chart illustrating an information processing method according to an illustrative embodiment.
FIG. 11 is a schematic flow chart illustrating an information processing method according to an illustrative embodiment.
FIG. 12 is a schematic block diagram illustrating an information processing apparatus according to an illustrative embodiment.
FIG. 13 is a schematic block diagram illustrating an information processing apparatus according to an illustrative embodiment.
FIG. 14 is a schematic block diagram illustrating an information processing apparatus according to an illustrative embodiment.
FIG. 15 is a schematic block diagram illustrating an information processing apparatus according to an illustrative embodiment.
FIG. 16 is a schematic block diagram illustrating a UE according to an illustrative embodiment.
FIG. 17 is a schematic block diagram illustrating a communication device according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with some aspects of embodiments of the present disclosure.

Terms used herein in the embodiments of the present disclosure are only for the purpose of describing specific embodiments, but should not be construed to limit the embodiments of the present disclosure. In the embodiments of the present disclosure, singular expressions such as "a", "an", "the", "above", "aforementioned", "this" and the like also include plural expressions, unless clearly indicated in the context otherwise. It should also be understood that the term "and/or" used herein represents and contains any or all possible combinations of one or more associated listed items. In the embodiments of the present disclosure, "a plurality" refers to two or more. The prefixes such as "first" and "second" in the embodiments of the present disclosure are only used to distinguish different described objects, but do not constitute any restrictions on the position, order, priority, quantity or content of the described objects. For the statement of the described objects, reference is made to the description in the context of the claims or embodiments, and no unnecessary restrictions should be constituted due to the use of prefix numerals. For example, although terms such as "first," "second" and "third" may be used for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the term "if" as used herein may be construed to mean "when" or "upon" or "in response to determining" depending on the context. In some embodiments, the names of information, and the like are not limited to the names described in the embodiments, and terms such as "information", "message", "signaling", "report", "indication", "configuration", and "data" may be used interchangeably.

In some embodiments of the present disclosure, "acquiring", "getting", "obtaining", "receiving", and "transmitting (sending and/or receiving)" are interchangeable, which may be interpreted as receiving from other entities, obtaining from a protocol, obtaining by self-processing, or other meanings.

In some embodiments of the present disclosure, "sending", "reporting", "issuing", and "transmitting (sending and/or receiving)" may be used interchangeably.

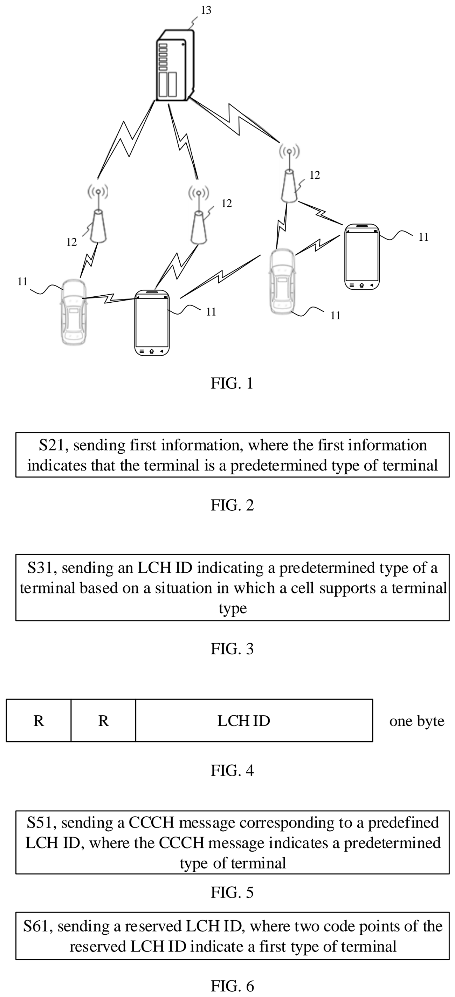

Reference is made to FIG. 1, which is a schematic block diagram illustrating a wireless communication system provided in an embodiment of the present disclosure. As shown in FIG. 1, the wireless communication system is a communication system based on a cellular mobile communication technology, and may include several UEs 11 and several access devices 12.

The UE 11 may be a device that provides voice and/or data connectivity to a user. The UE 11 may communicate with one or more core networks via a radio access network (RAN). The UE 11 may be an Internet of Things terminal, such as a sensor device, a mobile phone (or called a "cellular" phone) and a computer with an Internet of Things terminal. For example, the UE 11 may be a fixed, portable, pocket-sized, handheld, computer built-in or vehicle-mounted apparatus. For example, the UE 11 may be a station (STA), a subscriber unit, a subscriber station, a mobile station, a mobile, a remote station, an access point, a remote terminal, an access terminal, a user terminal, a user agent, or a user device. Alternatively, the UE 11 may also be a device of an unmanned aerial vehicle. Alternatively, the UE 11 may also be a vehicle-mounted device, for example, a driving computer with a wireless communication function, or a wireless communication device externally connected with a driving computer. Alternatively, the UE 11 may also be a roadside device, such as a street lamp, a signal lamp or other roadside devices with a wireless communication function.

The access device 12 may be a network side device in the wireless communication system. The wireless communication system may be a 4th generation mobile communication (4G) system, also referred to as a long term evolution (LTE) system. Alternatively, the wireless communication system may also be a 5th generation mobile communication network technology (5G) system, also referred to as a new radio (NR) system or a 5G NR system. Alternatively, the wireless communication system may also be a next generation system of the 5G system. The access network in the 5G system may be referred to as a new generation-radio access network (NG-RAN) or a machine-type communication (MTC) system.

The access device 12 may be an evolved access device (eNB) used in the 4G system. Alternatively, the access device 12 may also be an access device (gNB) of a centralized-distributed architecture in the 5G system. When the access device 12 adopts the centralized-distributed architecture, it usually includes a centralized unit (CU) and at least two distributed units (DUs). A protocol stack of a packet data convergence protocol (PDCP) layer, a radio link control (RLC) layer and a media access control (MAC) layer is provided in the centralized unit. A protocol stack of a physical (PHY) layer is provided in the distributed unit. The specific implementation of the access device 12 is not limited in the embodiments of the present disclosure.

A wireless connection may be established between the access device 12 and the UE 11 via a wireless radio. In different embodiments, the wireless radio is a wireless radio based on the 4G standard. Alternatively, the wireless radio is a wireless radio based on the 5G standard. For example, the wireless radio is a new radio. Alternatively, the wireless radio may also be a wireless radio based on the next generation mobile communication network technology standard of the 5G.

In some embodiments, the above wireless communication system may further include a core network element 13.

Several access network elements 12 are connected to the core network element 13, respectively. The core network element 13 may be a core network device in the wireless communication system, for example, the core network element 13 may be a mobility management entity (MME) in an evolved packet core (EPC). Alternatively, the core network device may be other core network devices, such as a serving gateway (SGW), a public data network gateway (PGW), a policy and charging rules function (PCRF), a home subscriber server (HSS), or the like; or the core network element 13 may also be a core network device in 5G, for example, the core network element 13 may be a policy control function (PCF), or a session management function (SMF), an access and mobility management function (AMF), a unified data management (UDM), a user plane function (UPF), or the like. The implementation form of the core network element 13 is not limited in the embodiments of the present disclosure.

In some embodiments, a new terminal type is proposed, which is called a reduced capability UE or a 5G energy saving (NR-lite) terminal or a RedCap terminal. This type of terminal is similar to Internet of Things (IoT) devices in an LTE system. This type of terminal usually needs to meet the following requirements: low cost, low complexity, a certain degree of coverage enhancement, and power saving. After this type of terminal is introduced, unlike ordinary enhanced mobile broadband (eMBB) terminals, RedCap terminals have limited time-frequency domain resources in some scenarios, such as industrial sensor scenarios and some wearable devices.

In some embodiments, since the time-frequency domain resources for scheduling are limited, RedCap terminals need to be indicated in advance, that is, the types of the terminals may be identified during the random access procedure to facilitate reasonable scheduling.

In some embodiments, early identification based on an MSG1 and early identification based on an MSG3 are introduced. The early identification based on the MSG1 may be achieved by using different random access resource allocations from that for ordinary users. However, considering that the predetermined random access resource cannot be selected in some cases, resulting in the early identification based on the MSG1 being invalid, early identification based on the MSG3 is required. Currently, early identification based on the MSG3 is achieved by placing a specific LCH ID in a message header during the MSG3 uplink transmission to the terminal.

In some embodiments, after the introduction of extended RedCap (eRedCap) terminals, compared with RedCap terminals, there are greater restrictions on the time-frequency domain resources scheduled for the eRedCap terminals, so the eRedCap terminals also need to be identified early. There are currently no regulations on how the LCH ID should be used.

As shown in FIG. 2, an embodiment of the present disclosure provides an information processing method, which is performed by a terminal and includes the following:
Step S21, first information is sent, where the first information indicates that the terminal is a predetermined type of terminal.

In some embodiments, the terminal may be, but is not limited to, the UE in the above embodiments. Optionally, the terminal may be at least one of: a mobile phone, a computer, a server, a wearable device, a game control platform, a roadside device, a vehicle-mounted device, or a multimedia device.

In some embodiments, the terminal may be a reduced capability UE, a 5G energy saving (NR-lite) terminal, a RedCap terminal, or an eRedCap terminal.

In some embodiments, the predetermined type of terminal includes one of: a first type of terminal or a second type of terminal. Optionally, the predetermined type of terminal may also be a third type of terminal.

Optionally, the terminal of the first type is a RedCap terminal of R18, the terminal of the second type is a RedCap terminal of R17, and the terminal of the third type is a terminal other than the RedCap terminal of R17 and the RedCap terminal of R18. The terminal of the third type is a common terminal, such as an eMBB terminal.

Optionally, the terminal of the predetermined type is a terminal with limited time-frequency domain resources. For example, the range of limitation of time-frequency domain resources scheduled for the terminal of the first type is larger than the range of limitation of time-frequency domain resources scheduled for the terminal of the second type. For example, the degree of limitation of time-frequency domain resources scheduled for the terminal of the first type is higher than the degree of limitation of time-frequency domain resources scheduled for the terminal of the second type.

In some embodiments, step S21 may be: sending the first information to a base station.

In some embodiments, the base station may be, but is not limited to, a base station, and may be various types of base stations. Optionally, the base station may be at least one of: a 3G base station, a 4G base station, a 5G base station, or other evolved base stations.

In some embodiments, the first information is early indication information. For example, the terminal sends the early indication information to the base station, where the early indication information indicates that the terminal is a predetermined type of terminal. In this way, it is possible to provide an early indication of the type of the terminal.

In some embodiments, sending the first information in step S21 may be: sending the first information during a random access procedure. For example, during the random access procedure, the terminal sends first information to the base station, where the first information indicates that the terminal is a predetermined type of terminal. In this way, the type of the terminal may be indicated early during the random access procedure, so that the base station knows what type of terminal the terminal is.

In some embodiments, the first information includes one of: an MSG3 in a four-step random access procedure, or an MSGA PUSCH in a two-step random access procedure.

Optionally, the terminal sends a random access procedure MSG3 to the base station, where the MSG3 indicates that the terminal is a first type of terminal or a second type of terminal.

It may be understood that in the two-step random access procedure, a physical random access channel (PRACH) MSG 1 and the PUSCH MSG3 are sent together, named a message A (MSGA), that is, the MSGA may include an MSGA PRACH and an MSGA PUSCH; the MSGA PRACH may be equivalent to the MSG1 in the four-step random access procedure, and the MSGA PUSCH may be equivalent to the MSG3 in the random access procedure. The MSGA PUSCH may include a CCCH message.

When the MSG3 and MSGA PUSCH messages are sent, they correspond to an MAC sub-protocol data unit (PDU), where the MAC sub-PDU includes two portions: an MAC subheader and an MAC service data unit (SDU). The MAC SDU carries the CCCH message. Therefore, in the MAC subheader, there will be an R or LCID (i.e., LCH ID) field, where the R field is a reserved bit, and the LCID field indicates the type of the CCCH message or the type of downlink shared channel (DL-SCH) and uplink shared channel (UL-SCH) data.

Therefore, different types of terminals may be indicated by different LCH IDs. That is, when terminals of different types send a CCCH message or DL-SCH and UL-SCH data, different types of terminals may be obtained via different LCH IDs, thus achieving the purpose of early indication.

Optionally, the terminal sends a random access procedure MSGA PUSCH to the base station, where the MSGA PUSCH indicates that the terminal is a first type of terminal. This means that when the message is sent, it may be distinguished by an LCID in the MAC subheader, or it may be distinguished by carrying the message in the CCCH message.

In this way, the type of the terminal may be indicated in advance by the message 3 or the message A in the random access procedure, which facilitates the base station to implement reasonable scheduling of the terminal according to the type of the terminal.

In some embodiments, the first information includes an LCH ID, where the LCH ID indicates a predetermined type of terminal. Optionally, the MSG3 in the random access procedure carries the LCH ID, or the MSGA PUSCH in the random access procedure carries the LCH ID. In this way, the type of the terminal may be specifically indicated by the LCH ID.

In some embodiments of the present disclosure, the terminal sends an LCH ID to the base station, that is, the terminal sends a CCCH message to the base station, and the LCH ID indicates the CCCH message.

In an embodiment of the present disclosure, a terminal sends first information, where the first information indicates that the terminal is a predetermined type of terminal. In this way, a base station may be informed of the type of terminal, so that the base station may determine whether the terminal is a terminal with limited time-frequency domain resources to be scheduled, which facilitates the base station to reasonably schedule the terminal.

It should be noted that those skilled in the art may understand that the methods provided in the embodiments of the present disclosure may be executed alone or together with some methods in the embodiments of the present disclosure or some methods in related technologies.

In some embodiments, sending the first information in step S21 includes one of:
sending the LCH ID indicating the predetermined type of terminal based on a situation in which a cell supports a terminal type;
sending a CCCH message corresponding to a predefined LCH ID, where the CCCH message indicates the LCH ID of the predetermined type of terminal; or
sending a reserved LCH ID, where two code points of the reserved LCH ID indicate a first type of terminal.

An embodiment of the present disclosure provides an information processing method, which is performed by a terminal and includes determining a manner for indicating an LCH ID.

As shown in FIG. 3, an embodiment of the present disclosure provides an information processing method, which is performed by a terminal and includes the following:
Step S31, an LCH ID indicating a predetermined type of terminal is sent based on a situation in which a cell supports a terminal type.

In some embodiments of the present disclosure, the first information is the first information in the above embodiments, the predetermined type of terminal is the predetermined type of terminal in the above embodiments, and the LCH ID is the LCH ID in the above embodiments.

Optionally, the situation in which the cell supports the terminal type is the situation in which a base station corresponding to a cell supports a predetermined type of terminal.

Optionally, the situation in which the cell supports the terminal type includes the situation in which the cell supports a first type of terminal and a second type of terminal, or the situation in which the cell supports a first type of terminal but does not support a second type of terminal.

In some embodiments, sending the LCH ID indicating the predetermined type of terminal based on the situation in which the cell supports the terminal type includes one of:
sending a reserved LCH ID based on the cell supporting the first type of terminal and the second type of terminal, where the two code points of the reserved LCH ID indicate the first type of terminal;
sending a predefined LCH ID based on the cell supporting the first type of terminal and not supporting the second type of terminal, where the two code points of the predefined LCH ID indicate the first type of terminal; or
sending a CCCH message corresponding to a predefined LCH ID based on the cell supporting the first type of terminal and the second type of terminal.

An embodiment of the present disclosure provides an information processing method, performed by a terminal and including: sending a reserved LCH ID based on a cell supporting a first type of terminal and a second type of terminal, where two code points of the reserved LCH ID indicate the first type of terminal.

Optionally, the reserved LCH ID may be an LCH ID different from the LCH ID indicating the second type of terminal. For example, two code points 35 and 36 of the LCH ID indicate that the terminal is the second type of terminal, and two code points 37 and 38 of the LCH ID indicate that the terminal is the first type of terminal.

Optionally, the terminal may indicate the first type of terminal via any two code points of the reserved LCH ID.

In this way, if the cell supports the first type of terminal and the second type of terminal, the first type of terminal may be indicated by the reserved LCH ID, so that the base station accurately knows what type of terminal the terminal is, which facilitates the base station to reasonably schedule the terminal. Furthermore, it is possible to flexibly indicate the type of the terminal.

An embodiment of the present disclosure provides an information processing method performed by a terminal and including: sending a predefined LCH ID based on a cell supporting a first type of terminal and not supporting a second type of terminal, where two code points of the predefined LCH ID indicate the first type of terminal.

Optionally, the predefined LCH ID may be the same LCH ID as the LCH ID indicating the second type of terminal. For example, two code points 35 and 36 of the LCH ID originally indicate that the terminal is a second type of terminal; however, since the base station corresponding to the cell does not support the second type of terminal, the two code points 35 and 36 of the LCH ID indicate that the terminal is a first type of terminal.

Optionally, the terminal may indicate the first type of terminal via any two code points of the predefined LCH ID.

In this way, if the cell supports the first type of terminal but does not support the second type of terminal, the first type of terminal may be indicated by the predefined LCH ID, so that the base station accurately knows what type of terminal the terminal is, which facilitates the base station to reasonably schedule the terminal. Furthermore, it is possible to flexibly indicate the type of the terminal.

An embodiment of the present disclosure provides an information processing method performed by a terminal and including: sending a CCCH message corresponding to a predefined LCH ID based on a cell supporting a first type of terminal and a second type of terminal.

Optionally, the predefined LCH ID may be the same LCH ID as the LCH ID indicating the second type of terminal.

In this way, in the embodiments of the present disclosure, when the terminal determines that the cell supports the first type of terminal and the second type of terminal, the predetermined type of terminal may also be indicated by the CCCH message corresponding to the LCH ID, which facilitates the base station to accurately know what predetermined type of terminal the terminal is, and thus facilitates the base station to reasonably schedule the terminal.

In some embodiments, the CCCH message carries a first request, where the first request indicates a first type of terminal. Optionally, the first request is a call setup request message. Optionally, an MSG3 carries a CCCH message. Optionally, the CCCH message is an UL CCCH message.

Thus, in the embodiments of the present disclosure, the base station may be informed of the type of the terminal via the call setup request carried in the CCCH message, or the like. This enables the base station to accurately know what predetermined type of terminal the terminal is, which facilitates the base station to reasonably schedule the terminal. Furthermore, in the embodiments of the present disclosure, it is possible to inform the base station of the type of the terminal when making a call setup request, thereby achieving early indication.

In some embodiments, a reserved field in an MAC subheader corresponding to the CCCH message indicates a predetermined type of terminal.

Optionally, a value of the reserved field is a first value, which indicates a first type of terminal; or a value of the reserved field is a second value, which indicates a second type of terminal. Optionally, the first value is one or more bits, and the second value is one or more bits.

For example, as shown in FIG. 4, the terminal sends an MSG3 to the base station, in which the MSG3 carries a CCCH message. A reserved field of an MAC subheader corresponding to the CCCH message indicates that the terminal is a predetermined type of terminal. For example, the predetermined field is an R domain or an R field. When a value of the R field is "1", two code points 35 and 36 of the LCH ID indicate that the terminal is a first type of terminal; or when a value of the R field is "0", two code points 35 and 36 of the LCH ID indicate that the terminal is a second type of terminal. Optionally, when the value of the R field is "1", two code points 35 and 36 of the LCH ID indicate a CCCH message and a CCCH1 message from the terminal of the first type, respectively. Optionally, when the value of the R field is "0", two code points 35 and 36 of the LCH ID indicate a CCCH message and a CCCH1 message from the terminal of the second type, respectively.

Thus, in the embodiments of the present disclosure, it is possible to accurately indicate what predetermined type of terminal the terminal is by the reserved field in the MAC subheader corresponding to the CCCH message, which facilitates the base station to perform reasonable scheduling based on the type of the terminal. Furthermore, it is possible to flexibly indicate the type of the terminal in multiple ways.

As shown in FIG. 5, an embodiment of the present disclosure provides an information processing method, which is performed by a terminal and includes the following:
Step S51: a CCCH message corresponding to a predefined LCH ID is sent, where the CCCH message indicates a predetermined type of terminal.

Optionally, the predefined LCH ID may be an LCH ID indicating a second type of terminal.

In this way, in the embodiments of the present disclosure, it is not necessary to consider whether the cell supports the predetermined type of terminal. It is possible to directly indicate what predetermined type of terminal the terminal is by the CCCH message, thereby providing another way to inform the base station of what predetermined type of terminal the terminal is, which is suitable for more application scenarios.

In some embodiments of the present disclosure, the CCCH message is the CCCH message in the above embodiments.

In this way, in the embodiments of the present disclosure, it is not necessary to consider whether the cell supports the predetermined type of terminal. It is possible to directly indicate what predetermined type of terminal the terminal is by the field in the corresponding MAC subheader when the CCCH message is sent, thereby providing another way to inform the base station of what predetermined type of terminal the terminal is, which is suitable for more application scenarios.

In some embodiments, the CCCH message carries a first request, where the first request indicates a first type of terminal. Optionally, the first request is a call setup request message. Optionally, an MSG3 carries a CCCH message. Optionally, the CCCH message is an UL CCCH message.

Thus, in the embodiments of the present disclosure, the base station may be informed of the type of the terminal via the call setup request carried in the CCCH message, or the like. This enables the base station to accurately know what predetermined type of terminal the terminal is, which facilitates the base station to reasonably schedule the terminal. Furthermore, in the embodiments of the present disclosure, it is possible to inform the base station of the type of the terminal when making a call setup request, thereby achieving early indication.

In some embodiments, a reserved field in an MAC subheader corresponding to the CCCH message indicates a predetermined type of terminal.

Optionally, a value of the reserved field is a first value, which indicates a first type of terminal; or a value of the reserved field is a second value, which indicates a second type of terminal. Optionally, the first value is one or more bits, and the second value is one or more bits.

In some embodiments, a reserved field carried in a corresponding MAC subheader when a CCCH message is sent indicates a predetermined type of terminal.

Optionally, a value of the reserved field is a first value, which indicates a first type of terminal; or a value of the reserved field is a second value, which indicates a second type of terminal. Optionally, the first value is one or more bits, and the second value is one or more bits.

Thus, in the embodiments of the present disclosure, it is possible to accurately indicate what predetermined type of terminal the terminal is by the reserved field in the MAC subheader corresponding to the CCCH message, which facilitates the base station to perform reasonable scheduling based on the type of the terminal. Furthermore, it is possible to flexibly indicate the type of the terminal in multiple ways.

As shown in FIG. 6, an embodiment of the present disclosure provides an information processing method, which is performed by a terminal and includes the following:
Step S61, a reserved LCH ID is sent, where two code points of the reserved LCH ID indicate a first type of terminal.

Optionally, the reserved LCH ID may be an LCH ID different from an LCH ID indicating a second type of terminal. For example, two code points 37 and 38 of the LCH ID indicate that the terminal is a first type of terminal. Optionally, two code points 37 and 38 of the LCH ID indicate a CCCH message and a CCCH1 message, respectively.

Optionally, the terminal may indicate the first type of terminal via any two code points of the reserved LCH ID.

In this way, regardless of the situation in which the cell supports the predetermined type of terminal, the first type of terminal may be indicated by the reserved LCH ID, so that the base station accurately knows what type of terminal the terminal is, which facilitates the base station to reasonably schedule the terminal. Furthermore, it is possible to flexibly indicate the type of the terminal.

It should be noted that those skilled in the art may understand that the methods provided in the embodiments of the present disclosure may be executed alone or together with some methods in the embodiments of the present disclosure or some methods in related technologies.

The following information processing method is performed by a terminal, and the description of the following information processing method is similar to the description of the information processing method performed by the terminal mentioned above. Moreover, for technical details not disclosed in the embodiments of the following information processing method performed by the terminal, reference is made to the description of the examples of the above-mentioned information processing method performed by the terminal, which will not be elaborated here.

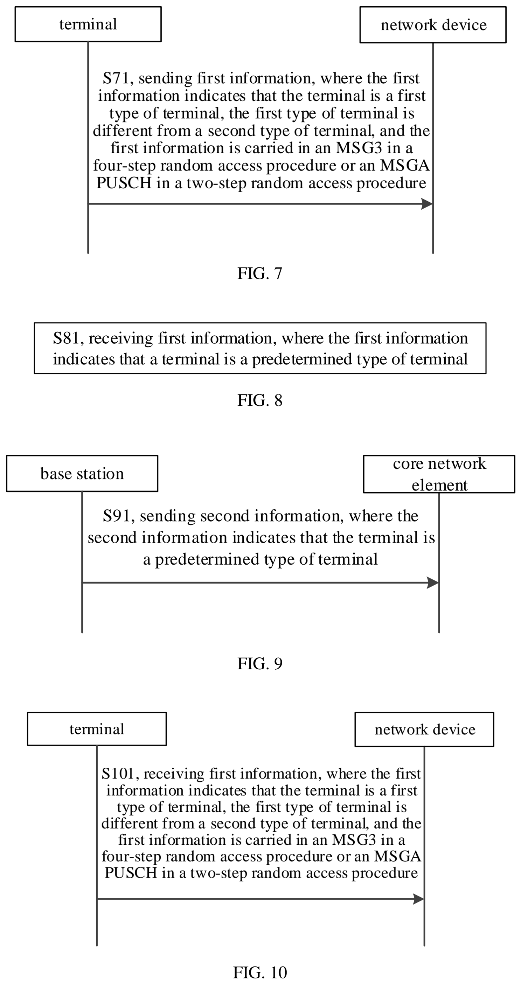

As shown in FIG. 7, an embodiment of the present disclosure provides an information processing method, which is performed by a terminal and includes the following:
Step S71, first information is sent to a network device, where the first information indicates that the terminal is a first type of terminal, the first type of terminal is different from a second type of terminal, and the first information is carried in an MSG3 in a four-step random access procedure or an MSGA PUSCH in a two-step random access procedure.

In some embodiments of the present disclosure, the first information may be the first information in the above embodiments, and the first type of terminal and the second type of terminal may be the first type of terminal and the second type of terminal in the above embodiments, respectively.

Optionally, the network device is a base station. Optionally, the network device may be other functions or nodes flexibly deployed in an access network.

In some embodiments of the present disclosure, the first LCH ID may be the reserved LCH ID in the above embodiments, each of the second LCH ID and the third LCH ID may be the predefined LCH ID in the above embodiments, the first request may be the first request in the above embodiments, and the reserved field may be the reserved field in the above embodiments.

In some embodiments, when a cell corresponding to the network device supports the first type of terminal and the second type of terminal, the first information includes a first LCH ID, where the first LCH ID indicates the first type of terminal, the first LCH ID is different from a second LCH ID, and the second LCH ID indicates the second type of terminal.

Alternatively, when a cell corresponding to the network device supports the first type of terminal but does not support the second type of terminal, the first information includes a third LCH ID, the third LCH ID indicates the first type of terminal, and the third LCH ID is the same as a second LCH ID.

Alternatively, when a cell corresponding to the network device supports the first type of terminal but does not support the second type of terminal, the first information includes a third LCH ID, and a first request carried in a CCCH message corresponding to the third LCH ID indicates the first type of terminal.

Alternatively, when a cell corresponding to the network device supports the first type of terminal but does not support the second type of terminal, the first information includes a third LCH ID, and the third LCH ID indicates the first type of terminal in a case where a value of a reserved field in an MAC subheader corresponding to a CCCH message corresponding to the third LCH ID is a first value.

Optionally, the situation in which the cell corresponding to the network device supports the terminal type refers to the situation in which a base station for the cell corresponding to the network device supports the terminal type, and also refers to the situation in which the network device (when it is a base station) supports the terminal type. For example, the cell corresponding to the network device supports the first type of terminal, that is, the base station for the cell corresponding to the network device supports the first type of terminal, that is, the network device (when it is a base station) supports the first type of terminal.

In some embodiments, the first information includes a third LCH ID, a first request carried in a CCCH message corresponding to the third LCH ID indicates the first type of terminal, the third LCH ID is the same as a second LCH ID, and the second LCH ID indicates the second type of terminal.

Alternatively, the first information includes a third LCH ID, and the third LCH ID indicates the first type of terminal when a value of a reserved field in an MAC subheader corresponding to a CCCH message corresponding to the third LCH ID is a first value.

In some embodiments, the first information includes a first LCH ID, the first LCH ID indicates the first type of terminal, the first LCH ID is different from a second LCH ID, and the second LCH ID indicates the second type of terminal.

For the above implementations, reference is made to the description on the terminal side, which will not be repeated here.

It should be noted that those skilled in the art may understand that the methods provided in the embodiments of the present disclosure may be executed alone or together with some methods in the embodiments of the present disclosure or some methods in related technologies.

The following information processing method is performed by a base station, and the description of the following information processing method is similar to the description of the information processing method performed by the terminal mentioned above. Moreover, for technical details not disclosed in the embodiments of the following information processing method performed by the base station, reference is made to the description of the examples of the above-mentioned information processing method performed by the terminal, which will not be elaborated here.

As shown in FIG. 8, an embodiment of the present disclosure provides an information processing method, which is performed by a base station and includes the following:
Step S81, first information is received, where the first information indicates that a terminal is a predetermined type of terminal.

In some embodiments of the present disclosure, the first information is the first information in the above embodiments, and the terminal and the predetermined type of terminal are the terminal and the predetermined type of terminal in the above embodiments, respectively.

Optionally, the terminal may be a reduced capability UE, a 5G energy saving (NR-lite) terminal, a RedCap terminal, or an eRedCap terminal.

Optionally, the predetermined type of terminal includes one of: a first type of terminal or a second type of terminal. Optionally, the predetermined type of terminal may also be a third type of terminal.

Optionally, the terminal of the first type is a RedCap terminal of R18, the terminal of the second type is a RedCap terminal of R17, and the terminal of the third type is a terminal other than the RedCap terminal of R17 and the RedCap terminal of R18. The terminal of the third type is a common terminal, such as an eMBB terminal.

Optionally, the terminal of the predetermined type is a terminal with limited time-frequency domain resources. The degree of limitation of time-frequency domain resources for the terminal of the first type is larger than the degree of limitation of time-frequency domain resources for the terminal of the second type.

Optionally, the first information includes one of: an MSG3 in a four-step random access procedure, or an MSGA PUSCH in a two-step random access procedure.

Optionally, the first information includes an LCH ID, where the LCH ID indicates a predetermined type of terminal.

In some embodiments, receiving the first information in step S61 includes one of:
receiving the LCH ID indicating the predetermined type of terminal;
receiving a CCCH message corresponding to a predefined LCH ID, where the CCCH message indicates the LCH ID of the predetermined type of terminal; or
receiving a reserved LCH ID, where two code points of the reserved LCH ID indicate a first type of terminal.

An embodiment of the present disclosure provides an information processing method, which is performed by a base station and includes: receiving an LCH ID indicating a predetermined type of terminal. Optionally, the LCH ID indicating the predetermined type of terminal is sent by the terminal based on the situation in which a cell supports a terminal type.

In some embodiments, receiving the LCH ID indicating the predetermined type of terminal includes one of:
receiving the reserved LCH ID, where two code points of the reserved LCH ID indicate a first type of terminal, and the reserved LCH ID is sent by the terminal in a case of determining that a cell supports the first type of terminal and a second type of terminal;
receiving a CCCH message corresponding to a predefined LCH ID, where the predefined LCH ID is sent by the terminal in a case of determining that a cell supports a first type of terminal and a second type of terminal; or
receiving a predefined LCH ID, where two code points of the predefined LCH ID indicate a first type of terminal, and the predefined LCH ID is sent by the terminal in a case of determining that a cell supports the first type of terminal but does not support a second type of terminal.

An information processing method provided in an embodiment of the present disclosure is performed by a base station and includes one of:
receiving a reserved LCH ID, where two code points of the reserved LCH ID indicate a first type of terminal, and the reserved LCH ID is sent by a terminal in a case of determining that a cell supports the first type of terminal and a second type of terminal; or
receiving a predefined LCH ID, where two code points of the predefined LCH ID indicate a first type of terminal, and the predefined LCH ID is sent by the terminal in a case of determining that a cell supports the first type of terminal but does not support a second type of terminal.

In some embodiments, the CCCH message carries a first request, and the first request indicates a first type of terminal; or a reserved field in an MAC subheader corresponding to the CCCH message indicates the predetermined type of terminal.

In some embodiments, a value of the reserved field is a first value, which indicates the first type of terminal; or a value of the reserved field is a second value, which indicates the second type of terminal.

For the above implementations, reference is made to the description on the terminal side, which will not be repeated here.

It should be noted that those skilled in the art may understand that the methods provided in the embodiments of the present disclosure may be executed alone or together with some methods in the embodiments of the present disclosure or some methods in related technologies.

As shown in FIG. 9, an embodiment of the present disclosure provides an information processing method, which is performed by a base station and includes the following:
Step S91, second information is sent to a core network element, where the second information indicates that the terminal is a predetermined type of terminal.

In the embodiments of the present disclosure, the first information is the first information in the above embodiments, and the terminal and the predetermined type of terminal are the terminal and the predetermined type of terminal in the above embodiments, respectively.

Optionally, the predetermined type of terminal includes one of: a first type of terminal or a second type of terminal.

Optionally, after receiving the first information, the base station sends the second information to the core network element.

Optionally, the second information is an initial UE message.

In an embodiment of the present disclosure, the base station may send the second information to the core network element to inform the core network element of what predetermined type of terminal the terminal is.

In some embodiments, sending the second information to the core network element in step S71 includes one of:
determining, based on the first information, that the terminal is the predetermined type of terminal, and sending, to the core network element, the second information indicating that the terminal is the predetermined type of terminal;
determining, based on the first information, that the terminal is a first type of terminal, and sending, to the core network element, the second information indicating that the terminal is the first type of terminal; or
determining, based on the first information, that the terminal is a second type of terminal, and sending, to the core network element, the second information indicating that the terminal is the second type of terminal.

An embodiment of the present disclosure provides an information processing method, which is performed by a base station, and includes: determining that a terminal is a predetermined type of terminal based on first information, and sending, to a core network element, second information indicating that the terminal is the predetermined type of terminal.

Optionally, the predetermined type of terminal is a first type of terminal and/or a second type of terminal.

Optionally, the second information carries a RedCap indication information element (IE), where the RedCap indication information element indicates that the terminal is the predetermined type of terminal.

In this way, after the base station knows that the terminal is the predetermined type of terminal, the base station may inform the core network element that the terminal is the predetermined type of terminal via the second information.

An embodiment of the present disclosure provides an information processing method, which is performed by a base station, and includes: determining that a terminal is a first type of terminal based on first information, and sending, to a core network element, second information indicating that the terminal is the first type of terminal.

Optionally, the second information carries an eRedCap indication information element, and the eRedCap indication information element is a reserved information element or a predefined information element. Optionally, the eRedCap indication information element indicates that the terminal is the first type of terminal.

In this way, when the base station knows what predetermined type of terminal the terminal is, that is, knows that the terminal is the first type of terminal, the base station may inform the core network element that the terminal is the first type of terminal via the second information.

An embodiment of the present disclosure provides an information processing method, which is performed by a base station, and includes: determining that a terminal is a second type of terminal based on first information, and sending, to a core network element, second information indicating that the terminal is the second type of terminal.

Optionally, the second information carries a RedCap indication information element, where the RedCap indication information element indicates that the terminal is the second type of terminal.

In this way, when the base station knows what predetermined type of terminal the terminal is, that is, knows that the terminal is the second type of terminal, the base station may inform the core network element that the terminal is the second type of terminal via the second information.

For the above implementations, reference is made to the description on the terminal side, which will not be repeated here.

It should be noted that those skilled in the art may understand that the methods provided in the embodiments of the present disclosure may be executed alone or together with some methods in the embodiments of the present disclosure or some methods in related technologies.

The following information processing method is performed by a base station, and the description of the following information processing method is similar to the description of the information processing method performed by the base station mentioned above. Moreover, for technical details not disclosed in the embodiments of the following information processing method performed by the base station, reference is made to the description of the examples of the above-mentioned information processing method performed by the base station, which will not be elaborated here.

As shown in FIG. 10, an embodiment of the present disclosure provides an information processing method, which is performed by a network device and includes the following:
Step S101, first information sent by a terminal is received, where the first information indicates that the terminal is a first type of terminal, the first type of terminal is different from a second type of terminal, and the first information is carried in an MSG3 in a four-step random access procedure or an MSGA PUSCH in a two-step random access procedure.

In some embodiments of the present disclosure, the first information may be the first information in the above embodiments, and the first type of terminal and the second type of terminal may be the first type of terminal and the second type of terminal in the above embodiments, respectively.

Optionally, the network device is a base station. Optionally, the network device may be other functions or nodes flexibly deployed in an access network.

In some embodiments of the present disclosure, the first LCH ID may be the reserved LCH ID in the above embodiments, each of the second LCH ID and the third LCH ID may be the predefined LCH ID in the above embodiments, the first request may be the first request in the above embodiments, and the reserved field may be the reserved field in the above embodiments.

In some embodiments, when a cell corresponding to the network device supports the first type of terminal and the second type of terminal, the first information includes a first LCH ID, where the first LCH ID indicates the first type of terminal, the first LCH ID is different from a second LCH ID, and the second LCH ID indicates the second type of terminal.

Alternatively, when a cell corresponding to the network device supports the first type of terminal but does not support the second type of terminal, the first information includes a third LCH ID, the third LCH ID indicates the first type of terminal, and the third LCH ID is the same as a second LCH ID.

Alternatively, when a cell corresponding to the network device supports the first type of terminal but does not support the second type of terminal, the first information includes a third LCH ID, and a first request carried in a CCCH message corresponding to the third LCH ID indicates the first type of terminal.

Alternatively, when a cell corresponding to the network device supports the first type of terminal but does not support the second type of terminal, the first information includes a third LCH ID, and the third LCH ID indicates the first type of terminal when a value of a reserved field in an MAC subheader corresponding to a CCCH message corresponding to the third LCH ID is a first value.

In some embodiments, the first information includes a third LCH ID, a first request carried in a CCCH message corresponding to the third LCH ID indicates the first type of terminal, the third LCH ID is the same as a second LCH ID, and the second LCH ID indicates the second type of terminal.

Alternatively, the first information includes a third LCH ID, and the third LCH ID indicates the first type of terminal when a value of a reserved field in an MAC subheader corresponding to a CCCH message corresponding to the third LCH ID is a first value.

In some embodiments, the first information includes a first LCH ID, the first LCH ID indicates the first type of terminal, the first LCH ID is different from a second LCH ID, and the second LCH ID indicates the second type of terminal.

For the above implementations, reference is made to the description on the terminal side and/or the base station side, which will not be repeated here.

It should be noted that those skilled in the art may understand that the methods provided in the embodiments of the present disclosure may be executed alone or together with some methods in the embodiments of the present disclosure or some methods in related technologies.

The following information processing method is performed by a core network element, and the description of the following information processing method is similar to the description of the information processing method performed by the base station mentioned above. Moreover, for technical details not disclosed in the embodiments of the following information processing method performed by the core network element, reference is made to the description of the examples of the above-mentioned information processing method performed by the base station, which will not be elaborated here.

An embodiment of the present disclosure provides an information processing method, which is performed by a core network element and includes the following:
Second information sent by a base station is received, where the second information indicates that a terminal is a predetermined type of terminal.

In some embodiments of the present disclosure, the second information is the second information in the above embodiments, and the terminal and the predetermined type of terminal are the terminal and the predetermined type of terminal in the above embodiments, respectively.

Optionally, the second information is an initial UE message.

Optionally, the core network element receives the second information sent by the base station, the second information indicating that the terminal is the predetermined type of terminal. Optionally, the second information is sent by the base station after the base station determines that the terminal is the predetermined type of terminal.

Optionally, the core network element receives second information sent by the base station, the second information indicating that the terminal is a first type of terminal. Optionally, the second information is sent by the base station after the base station determines that the terminal is the first type of terminal.

Optionally, the core network element receives second information sent by the base station, the second information indicating that the terminal is a second type of terminal. Optionally, the second information is sent by the base station after the base station determines that the terminal is the second type of terminal.

For the above implementations, reference is made to the description on the base station side, which will not be repeated here.

It should be noted that those skilled in the art may understand that the methods provided in the embodiments of the present disclosure may be executed alone or together with some methods in the embodiments of the present disclosure or some methods in related technologies.

In order to further explain any embodiment of the present disclosure, specific embodiments are provided below.

### Example 1

An information processing method according to an embodiment of the present disclosure includes the following steps.

In some embodiments, the terminal determines a manner for early identification of a particular type of terminal. Optionally, the specific type of terminal is the predetermined type of terminal in the above embodiments. Optionally, the specific type of terminal at least includes a first type of terminal.

Optionally, the first type of terminal is different from a second type of terminal (for example, an R17 RedCap terminal) and a third type of terminal (for example, a common terminal or an eMBB terminal).

In some embodiments, the terminal decides which early identification manner to use based on the situation in which a cell supports the first type of terminal and the second type of terminal.

Optionally, if the cell supports the first type of terminal and the second type of terminal, a different LCH ID from that of the second type of terminal will be used for the early indication of an MSG3 or an MSGA PUSCH. For example, the terminal will take out two code points from the reserved LCH ID for the early indication of the MSG3 or the MSGA PUSCH from the first type of terminal (a code point 37 for a CCCH message and a code point 38 for a CCCH1 message, respectively).

Optionally, if the cell supports the first type of terminal but does not support the second type of terminal, the predefined LCH ID for the second type of terminal will be used for the early indication of the MSG3 or the MSGA PUSCH. For example, the original two code points from the predefined LCH ID for the second type of terminal are used for the early indication of the MSG3 or MSGA PUSCH from the first type of terminal (the original two code points are code points 35 and 36 of the LCH ID, which are used for a CCCH message and a CCCH1 message, respectively).

In some embodiments, for the early indication of the MSG3 or MSGA PUSCH, a predefined LCH ID for the second type of terminal will be used, but other fields carried in the MSG3 or MSGA PUSCH or subsequent messages may be used to distinguish specific types of terminals (regardless of the support status of the cell).

Optionally, a CCCH message (e.g., an UL CCCH message) carried by the MSG3 or MSGA PUSCH, for example, a call setup request message, carries a field indicating that the terminal is an R18 eRedCap terminal (i.e., a first type of terminal), for example, indicating that the terminal is an R18 eRedCap terminal in a call setup reason.

Optionally, a reserved field in an MAC subheader corresponding to a CCCH message (e.g., an UL CCCH message) carried by the MSG3 or MSGA PUSCH is used to identify a specific type of terminal. If the terminal is an R18 eRedCap terminal, an R field is set to 1, and a code point 35 or 36 of the LCID ID indicates that this is directed towards a CCCH message and a CCCH1 message from the R18 RedCap terminal, respectively. Alternatively, if the terminal is an R17 RedCap terminal, an R field is set to 0, and a code point 35 or 36 of the LCID ID indicates that this is directed towards a CCCH message and a CCCH1 message from the R17 RedCap terminal, respectively.

At this time, the R field may use one of the two existing R fields in the MAC subheader.

Optionally, the remaining R field may be used to further differentiate the R18 eRedCap terminals (if classified into first-category R18 eRedCap terminals and second-category R18 eRedCap terminals). For example, if R=1, the terminal is a first-type R18 eRedCap terminal; and if R=0, the terminal is a second-type R18 eRedCap terminal.

In some embodiments, if the cell supports the first type of terminal but does not support the second type of terminal, the early indication of the MSG will be performed by using the predefined LCH ID for the second type of terminal, that is, using code points 35 and 36 of the LCH ID. Alternatively, if the cell supports the first type of terminal and the second type of terminal, other fields (e.g., R fields) carried in the MSG3 or MSGA PUSCH or subsequent messages (e.g., call setup request messages) are used to distinguish specific types of terminals.

In some embodiments, the first type of terminal will use a different LCH ID from the second type of terminal for the early indication of the MSG3 or MSGA PUSCH (regardless of the support status of the cell). Optionally, the terminal will take out two code points from the reserved LCH ID for the early indication of the MSG3 from the first type of terminal (the two code points are used for a CCCH message and a CCCH1 message, respectively).

In some embodiments, for the first type of terminal and/or the second type of terminal, after the base station obtains the terminal type by early identification, the base station will notify a core network.

Optionally, for the first type of terminal and/or the second type of terminal, after the base station obtains the terminal type by early identification, the base station will notify the core network via an initial UE message and inform the core network that the terminal is an RedCap terminal type (for example, using an original RedCap indication IE to inform the core network).

Optionally, for the second type of terminal, after the base station obtains the terminal type by early identification, the base station will notify the core network via the initial UE message and inform the core network that the terminal is specifically an RedCap terminal type; or for the first type of terminal, after the base station obtains the terminal type by early identification, the base station will notify the core network via the initial UE message and inform the core network that the terminal is an eRedCap type terminal (for example, a new eRedCap indication IE needs to be added to inform the core network).

Optionally, as shown in Table 1, a value of an LCID of an uplink shared channel (dedicated control channel, UL-SCH) is provided. Optionally, the LCID may be the LCH ID in the above embodiments.

**Table 1**

| **Code point/Index** | **LCID value** |
|---|---|
| 0 | CCCH of size 64 bits (referred to as "CCCH1" in TS 38.331 [5]), except for a RedCap UE or eRedCap UE |
| 1-32 | Identity of the logical channel of dedicated control channel (DCCH) and dedicated traffic channel (DTCH) |
| 33 | Extended logical channel ID field (two-octet eLCID field) |
| 34 | Extended logical channel ID field (one-octet eLCID field) |
| 35 | CCCH of size 48 bits (referred to as "CCCH" in TS 38.331 [5]) for a RedCap UE or eRedCap UE |
| 36 | CCCH of size 64 bits (referred to as "CCCH1" in TS 38.331 [5]) for a RedCap UE or eRedCap UE |
| 37 | CCCH of size 48 bits (referred to as "CCCH" in TS 38.331 [5]) for an eRedCap UE if 35 is used by a RedCap UE. Otherwise, use 35 |
| 38 | CCCH of size 64 bits (referred to as "CCCH1" in TS 38.331 [5]) for an eRedCap UE if 36 is used by a RedCap UE. Otherwise, use 36 |
| 39-42 | Reserved |
| 43 | Truncated Enhanced Beam Failure Recovery (BFR) (one octet Cᵢ) |
| 44 | Timing Advance Report |
| 45 | Truncated Sidelink Buffer Status Report (SL BSR) |
| 46 | SL BSR |
| 47 | Reserved |
| 48 | Listen before Talk (LBT) failure (four octets) |
| 49 | LBT failure (one octet) |
| 50 | BFR (one octet) |
| 51 | Truncated BFR (one octet) |
| 52 | CCCH of size 48 bits (referred to as "CCCH" in TS 38.331 [5]), except for a RedCap UE |
| 53 | Recommended bit rate query |
| 54 | Multiple Entry Power Headroom Report (PHR) (four octets) |
| 55 | Configured Grant Confirmation |
| 56 | Multiple Entry PHR (one octet) |
| 57 | Single Entry PHR |
| 58 | cell radio network temporary identity (C-RNTI) |
| 59 | Short Truncated BSR |
| 60 | Long Truncated BSR |
| 61 | Short BSR |
| 62 | Long BSR |
| 63 | Padding |

Optionally, as shown in Table 2, another value of an LCID of an uplink shared channel (dedicated control channel, UL-SCH) is provided. Optionally, the LCID may be the LCH ID in the above embodiments.

**Table 2**

| **Code point/Index** | **LCID value** |
|---|---|
| 0 | CCCH of size 64 bits (referred to as "CCCH1" in TS 38.331 [5]), except for a RedCap UE or eRedCap UE |
| 1-32 | Identity of the logical channel of DCCH and DTCH |
| 33 | Extended logical channel ID field (two-octet eLCID field) |
| 34 | Extended logical channel ID field (one-octet eLCID field) |
| 35 | CCCH of size 48 bits (referred to as "CCCH" in TS 38.331 [5]) for a RedCap UE or eRedCap UE; if a specific R in MAC subheader is set =1, it is for eRedCap UE. |
| 36 | CCCH of size 64 bits (referred to as "CCCH1" in TS 38.331 [5]) for a RedCap UE or eRedCap UE; if a specific R in MAC subheader is set =1, it is for eRedCap UE. |
| 39-42 | Reserved |
| 43 | Truncated Enhanced BFR (one octet Cᵢ) |
| 44 | Timing Advance Report |
| 45 | Truncated SL BSR |
| 46 | SL BSR |
| 47 | Reserved |
| 48 | LBT failure (four octets) |
| 49 | LBT failure (one octet) |
| 50 | BFR (one octet) |
| 51 | Truncated BFR (one octet) |
| 52 | CCCH of size 48 bits (referred to as "CCCH" in TS 38.331 [5]), except for a RedCap UE |
| 53 | Recommended bit rate query |
| 54 | Multiple Entry PHR (four octets) |
| 55 | Configured Grant Confirmation |
| 56 | Multiple Entry PHR (one octet) |
| 57 | Single Entry PHR |
| 58 | C-RNTI |
| 59 | Short Truncated BSR |
| 60 | Long Truncated BSR |
| 61 | Short BSR |
| 62 | Long BSR |
| 63 | Padding |

It should be understood that each element in the above Table 1 or Table 2 exists independently. These elements are listed in the same table in an illustrative manner, but it does not mean that all elements in the table must exist at the same time as shown in the table. The value of each element is independent of the value of any other element in Table 1 or Table 2. Therefore, those skilled in the art may understand that the value of each element in Table 1 or Table 2 is an independent embodiment.

For the above implementations, reference is made to the description of the first core network element side and/or the second core network element side and/or the access network element side, which will not be repeated here.

It should be noted that those skilled in the art may understand that the methods provided in the embodiments of the present disclosure may be executed alone or together with some methods in the embodiments of the present disclosure or some methods in related technologies.

### Example 2

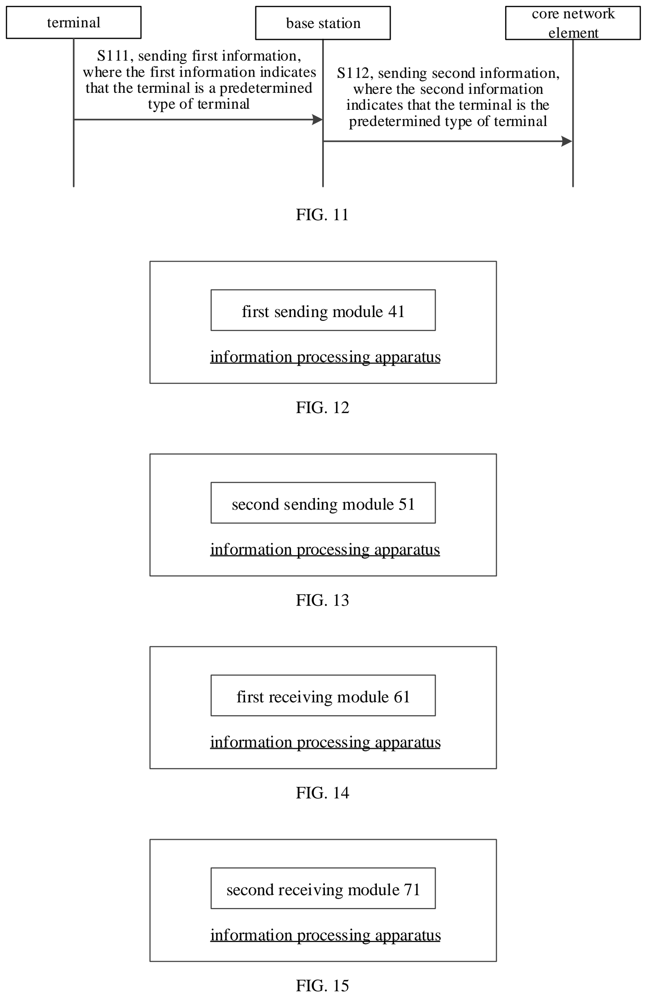

As shown in FIG. 11, an embodiment of the present disclosure provides an information processing method, which is performed by a communication system including a terminal, a base station, and a core network element. The information processing method includes the following steps.

At step S111, the terminal sends first information to the base station, where the first information indicates that the terminal is a predetermined type of terminal.

Optionally, the first information is an MSG3 or MSGA PUSCH.

Optionally, the terminal sends a reserved LCH ID based on the situation in which a cell supports a first type of terminal and a second type of terminal, where two code points of the reserved LCH ID indicate the first type of terminal; or the terminal sends a predefined LCH ID based on the situation in which a cell supports the first type of terminal but does not support the second type of terminal, where two code points of the predefined LCH ID indicate the first type of terminal.

Optionally, the terminal sends a CCCH message corresponding to a predefined LCH ID, where the CCCH message carries a first request, and the first request indicates a first type of terminal and indicates a predetermined type of terminal.

Optionally, the terminal sends a CCCH message corresponding to a predefined LCH ID, and a value of a reserved field in an MAC subheader corresponding to the CCCH message is a first value, which indicates a first type of terminal; or a value of a reserved field is a second value, which indicates a second type of terminal.

At step S112, the base station sends second information to the core network element, where the second information indicates that the terminal is the predetermined type of terminal.

Optionally, the second information is an initial UE message.

Optionally, if the base station determines that the terminal is a predetermined terminal, the base station sends, to the core network element, second information indicating that the terminal is the predetermined type of terminal.

Optionally, if the base station determines that the terminal is a first type of terminal, the base station sends, to the core network element, second information indicating that the terminal is the first type of terminal; or if the base station determines that the terminal is a second type of terminal, the base station sends, to the core network element, second information indicating that the terminal is the second type of terminal.

For the above implementations, reference is made to the description on the terminal side and/or the base station side, which will not be repeated here.

It should be noted that those skilled in the art may understand that the methods provided in the embodiments of the present disclosure may be executed alone or together with some methods in the embodiments of the present disclosure or some methods in related technologies.

As shown in FIG. 12, an embodiment of the present disclosure provides an information processing apparatus, including:
a first sending module 41 configured to send first information, where the first information indicates that the terminal is a predetermined type of terminal.

In some embodiments, the predetermined type of terminal includes one of:
a first type of terminal; or
a second type of terminal.

In some embodiments, the first information includes one of:
an MSG3 in a four-step random access procedure; or
an MSGA PUSCH in a two-step random access procedure.

In some embodiments, the first information includes an LCH ID, and the LCH ID indicates the predetermined type of terminal.

An embodiment of the present disclosure provides an information processing apparatus, including a first sending module 41 configured to perform one of:
sending the LCH ID indicating the predetermined type of terminal based on a situation in which a cell supports a terminal type;
sending a CCCH message corresponding to a predefined LCH ID, where the CCCH message indicates the predetermined type of terminal; or
sending a reserved LCH ID, where two code points of the reserved LCH ID indicate a first type of terminal.

In some embodiments, the first sending module 41 is configured to perform one of:
sending the reserved LCH ID based on the cell supporting the first type of terminal and a second type of terminal, where the two code points of the reserved LCH ID indicate the first type of terminal;
sending a CCCH message corresponding to a predefined LCH ID based on the cell supporting the first type of terminal and a second type of terminal; or
sending a predefined LCH ID based on the cell supporting the first type of terminal and not supporting a second type of terminal, where the two code points of the predefined LCH ID indicate the first type of terminal.

In some embodiments, the CCCH message carries a first request, where the first request indicates the first type of terminal; or a reserved field in an MAC subheader corresponding to the CCCH message indicates the predetermined type of terminal.

In some embodiments, a value of the reserved field is a first value, which indicates the first type of terminal; or a value of the reserved field is a second value, which indicates the second type of terminal.

As shown in FIG. 13, an embodiment of the present disclosure provides an information processing apparatus, including:
a second sending module 51 configured to send first information to a network device, where the first information indicates that the terminal is a first type of terminal, the first type of terminal is different from a second type of terminal, and the first information is carried in an MSG3 in a four-step random access procedure or an MSGA PUSCH in a two-step random access procedure.

The information processing apparatus provided in the embodiments of the present disclosure may be a terminal.

As shown in FIG. 14, an embodiment of the present disclosure provides an information processing apparatus, including:
a first receiving module 61 configured to receive first information, where the first information indicates that a terminal is a predetermined type of terminal.

In some embodiments, the predetermined type of terminal includes one of:
a first type of terminal; or
a second type of terminal.

In some embodiments, the first information includes one of:
an MSG3 in a four-step random access procedure; or
an MSGA PUSCH in a two-step random access procedure.

In some embodiments, the first information includes an LCH ID, and the LCH ID indicates the predetermined type of terminal.

An embodiment of the present disclosure provides an information processing apparatus, including a first receiving module 61 configured to perform one of:
receiving the LCH ID indicating the predetermined type of terminal;
receiving a CCCH message corresponding to a predefined LCH ID, where the CCCH message indicates the LCH ID of the predetermined type of terminal; or
receiving a reserved LCH ID, where two code points of the reserved LCH ID indicate a first type of terminal.

An embodiment of the present disclosure provides an information processing apparatus, including a first receiving module 61 configured to receive a CCCH message corresponding to a predefined LCH ID, where the CCCH message carries a radio resource control (RRC) signaling. Optionally, the RRC signaling includes, but is not limited to, an RRC connection request.

An embodiment of the present disclosure provides an information processing apparatus, including a first receiving module 61 configured to perform one of:
receiving the reserved LCH ID, where the two code points of the reserved LCH ID indicate the first type of terminal, and the reserved LCH ID is sent by the terminal in a case of determining that a cell supports the first type of terminal and a second type of terminal; or
receiving a predefined LCH ID, where two code points of the predefined LCH ID indicate the first type of terminal, and the predefined LCH ID is sent by the terminal in a case of determining that a cell supports the first type of terminal but does not support a second type of terminal.

In some embodiments, the CCCH message carries a first request, where the first request indicates the first type of terminal; or a reserved field in an MAC subheader corresponding to the CCCH message indicates the predetermined type of terminal.

In some embodiments, a value of the reserved field is a first value, which indicates the first type of terminal; or a value of the reserved field is a second value, which indicates the second type of terminal.

An embodiment of the present disclosure provides an information processing apparatus, including a third sending module configured to send second information to a core network element, where the second information indicates that the terminal is the predetermined type of terminal.

In some embodiments, the second information includes an initial UE message.

An embodiment of the present disclosure provides an information processing apparatus, including a third sending module configured to perform one of:
determining, based on the first information, that the terminal is the predetermined type of terminal, and sending, to the core network element, the second information indicating that the terminal is the predetermined type of terminal;
determining, based on the first information, that the terminal is a first type of terminal, and sending, to the core network element, the second information indicating that the terminal is the first type of terminal; or
determining, based on the first information, that the terminal is a second type of terminal, and sending, to the core network element, the second information indicating that the terminal is the second type of terminal.

As shown in FIG. 15, an embodiment of the present disclosure provides an information processing apparatus, including:
a second receiving module 71 configured to receive first information sent by a terminal, where the first information indicates that the terminal is a first type of terminal, the first type of terminal is different from a second type of terminal, and the first information is carried in an MSG3 in a four-step random access procedure or an MSGA PUSCH in a two-step random access procedure.

The information processing apparatus provided in the embodiments of the present disclosure may be a network device. Optionally, the network device is a base station.

It should be noted that those skilled in the art may understand that the apparatuses provided in the embodiments of the present disclosure may be implemented alone or together with some apparatuses in the embodiments of the present disclosure or some apparatuses in related technologies.

With respect to the apparatuses in the above embodiments, the specific manners for performing operations for individual modules therein have been described in detail in the embodiments regarding the methods, which will not be elaborated herein.

An embodiment of the present disclosure provides a communication device, including a processor, a transceiver, a memory, and an executable program stored in the memory and capable of being run by the processor, where the processor performs the information processing method provided above when running the executable program.

In some embodiments, the processor may include various types of storage media that are non-transitory computer storage media which may continue to memorize information stored thereon after the communication device is powered down.

In some embodiments, the communication device includes a terminal, or a base station, or a core network element.

The processor may be connected to the memory via a bus or the like for reading the executable program stored on the memory, such as at least one of the methods shown in FIG. 2 to FIG. 3 and FIG. 5 to FIG. 11.

An embodiment of the present disclosure provides a computer storage medium having stored therein an executable program that, when executed by a processor, causes the information processing method provided above to be implemented, such as at least one of the methods shown in FIG. 2 to FIG. 3 and FIG. 5 to FIG. 11.

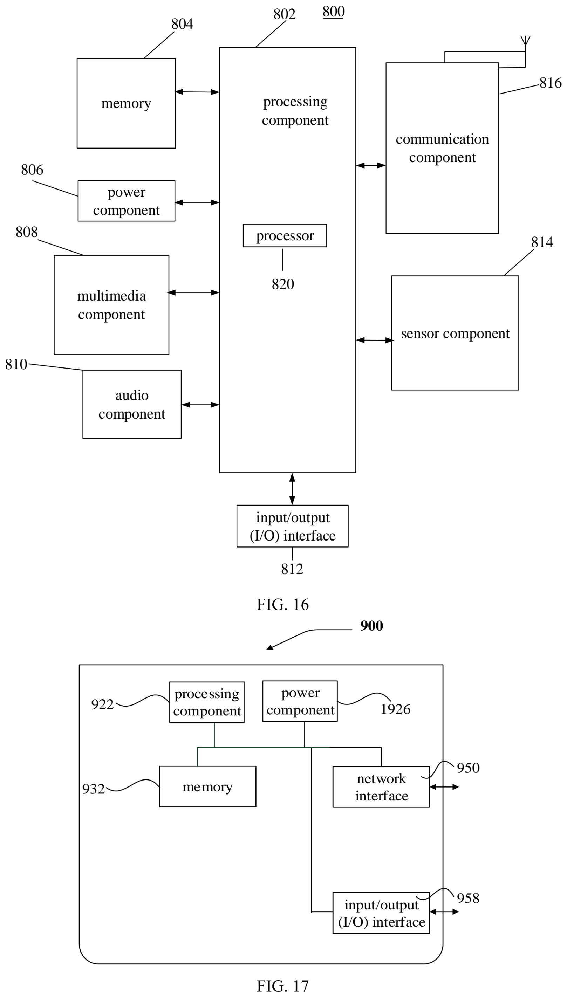

FIG. 16 is a schematic block diagram illustrating a UE 800 according to an illustrative embodiment. For example, the UE 800 may be a mobile phone, a computer, a digital broadcast terminal, a messaging device, a game console, a tablet device, a medical device, a fitness device, a personal digital assistant, or the like.

Referring to FIG. 16, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to generate all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in location of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 may access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer-readable storage medium including instructions, such as included in the memory 804, executable by the processor 820 in the UE 800, for generating the above-mentioned methods. For example, the non-transitory computer-readable storage medium may be a ROM, a random access memory (RAM), a CD-ROM, a magnetic tape, a floppy disc, an optical data storage device, and the like.

As shown in FIG. 17, embodiments of the present disclosure illustrate a structure of a communication device. For example, the communication device 900 may be provided as a network side device. The communication device may be various network elements such as the aforementioned access network element and/or network functions. The communication device may be a terminal, a base station, or a core network element in the above embodiments.

Referring to FIG. 17, the communication device 900 includes a processing component 922 and a memory resource represented by a memory 932. The processing component 922 may further include one or more processors. The memory 932 is configured to store instructions executable by the processing component 922, such as an application program. The application program stored in the memory 932 may include one or more modules each corresponding to a set of instructions. In addition, the processing component 922 is configured to execute the instructions to perform any of the aforementioned methods applied to the access device.

The communication device 900 further includes a power component 926 configured to perform a power management on the communication device 900, a wired or wireless network interface 950 configured to connect the communication device 900 to the network, and an input/output (I/O) interface 958. The communication device 900 may operate an operating system stored in the memory 932, such as Windows Server^{™}, Mac OS X^{™}, Unix^{™}, Linux^{™}, Free BSD^{™}, or the like.

In the absence of contradiction, each step in any implementation or embodiment may be implemented as an independent embodiment, and the steps may be arbitrarily combined. For example, a solution after removing some steps in a certain implementation or embodiment may also be implemented as an independent embodiment, and the order of steps in a certain implementation or embodiment may be arbitrarily exchanged. In addition, the optional methods or optional examples in a certain implementation or embodiment may be arbitrarily combined. Moreover, the various implementations or embodiments may be arbitrarily combined. For example, some or all steps of different implementations or embodiments may be arbitrarily combined, and a certain implementation or embodiment may be arbitrarily combined with the optional methods or optional examples of other implementations or embodiments.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including common knowledge or conventional technical means known in the art but not disclosed in the present disclosure. The specification and examples should be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. An information processing method, performed by a terminal and comprising:
sending first information, wherein the first information indicates that the terminal is a predetermined type of terminal.

2. The method according to claim 1, wherein the first information comprises one of:
a message 3 (MSG3) in a four-step random access procedure; or
a message A (MSGA) physical uplink shared channel (PUSCH) in a two-step random access procedure.

3. The method according to claim 1 or 2, wherein the first information comprises a logical channel identifier (LCH ID), and the LCH ID indicates the predetermined type of terminal.

4. The method according to claim 3, wherein sending the first information comprises one of:
sending the LCH ID indicating the predetermined type of terminal based on a situation in which a cell supports a terminal type;
sending a common control channel (CCCH) message corresponding to a predefined LCH ID, wherein the CCCH message indicates the predetermined type of terminal; or
sending a reserved LCH ID, wherein two code points of the reserved LCH ID indicate a first type of terminal.

5. The method according to claim 4, wherein sending the LCH ID indicating the predetermined type of terminal based on the situation in which the cell supports the terminal type comprises one of:
sending the reserved LCH ID based on the cell supporting the first type of terminal and a second type of terminal, wherein the two code points of the reserved LCH ID indicate the first type of terminal;
sending a CCCH message corresponding to a predefined LCH ID based on the cell supporting the first type of terminal and a second type of terminal; or
sending a predefined LCH ID based on the cell supporting the first type of terminal and not supporting a second type of terminal, wherein the two code points of the predefined LCH ID indicate the first type of terminal.

6. The method according to claim 4 or 5, wherein
the CCCH message carries a first request, wherein the first request indicates the first type of terminal; or
a reserved field in a media access control (MAC) subheader corresponding to the CCCH message indicates the predetermined type of terminal.

7. The method according to claim 6, wherein
a value of the reserved field is a first value, which indicates the first type of terminal; or
a value of the reserved field is a second value, which indicates the second type of terminal.

8. An information processing method, performed by a terminal and comprising:
sending first information to a network device, wherein the first information indicates that the terminal is a first type of terminal, the first type of terminal is different from a second type of terminal, and the first information is carried in an MSG3 in a four-step random access procedure or a message A (MSGA) physical uplink shared channel (PUSCH) in a two-step random access procedure.

9. The method according to claim 8, wherein
in a case where a cell corresponding to the network device supports the first type of terminal and the second type of terminal, the first information comprises a first logical channel identifier (LCH ID), wherein the first LCH ID indicates the first type of terminal, the first LCH ID is different from a second LCH ID, and the second LCH ID indicates the second type of terminal; or
in a case where a cell corresponding to the network device supports the first type of terminal but does not support the second type of terminal, the first information comprises a third LCH ID, the third LCH ID indicates the first type of terminal, and the third LCH ID is identical to a second LCH ID; or
in a case where a cell corresponding to the network device supports the first type of terminal but does not support the second type of terminal, the first information comprises a third LCH ID, and a first request carried in a common control channel (CCCH) message corresponding to the third LCH ID indicates the first type of terminal; or
in a case where a cell corresponding to the network device supports the first type of terminal but does not support the second type of terminal, the first information comprises a third LCH ID, and the third LCH ID indicates the first type of terminal in a case where a value of a reserved field in a media access control (MAC) subheader corresponding to a CCCH message corresponding to the third LCH ID is a first value.

10. The method according to claim 8, wherein
the first information comprises a third LCH ID, a first request carried in a CCCH message corresponding to the third LCH ID indicates the first type of terminal, the third LCH ID is identical to a second LCH ID, and the second LCH ID indicates the second type of terminal; or
the first information comprises a third LCH ID, and the third LCH ID indicates the first type of terminal in a case where a value of a reserved field in an MAC subheader corresponding to a CCCH message corresponding to the third LCH ID is a first value.

11. The method according to claim 8, wherein
the first information comprises a first LCH ID, wherein the first LCH ID indicates the first type of terminal, the first LCH ID is different from a second LCH ID, and the second LCH ID indicates the second type of terminal.

12. An information processing method, performed by a base station and comprising:
receiving first information, wherein the first information indicates that a terminal is a predetermined type of terminal.

13. The method according to claim 12, wherein the first information comprises one of:
a message 3 (MSG3) in a four-step random access procedure; or
a message A (MSGA) physical uplink shared channel (PUSCH) in a two-step random access procedure.

14. The method according to claim 12 or 13, wherein the first information comprises a logical channel identifier (LCH ID), and the LCH ID indicates the predetermined type of terminal.

15. The method according to claim 14, wherein receiving the first information comprises one of:
receiving the LCH ID indicating the predetermined type of terminal;
receiving a common control channel (CCCH) message corresponding to a predefined LCH ID, wherein the CCCH message indicates the LCH ID of the predetermined type of terminal; or
receiving a reserved LCH ID, wherein two code points of the reserved LCH ID indicate a first type of terminal.

16. The method according to claim 15, wherein receiving the LCH ID indicating the predetermined type of terminal comprises one of:
receiving the reserved LCH ID, wherein the two code points of the reserved LCH ID indicate the first type of terminal, and the reserved LCH ID is sent by the terminal in a case of determining that a cell supports the first type of terminal and a second type of terminal;
receiving a CCCH message corresponding to a predefined LCH ID, wherein the predefined LCH ID is sent by the terminal in a case of determining that a cell supports the first type of terminal and a second type of terminal; or
receiving a predefined LCH ID, wherein two code points of the predefined LCH ID indicate the first type of terminal, and the predefined LCH ID is sent by the terminal in a case of determining that a cell supports the first type of terminal but does not support a second type of terminal.

17. The method according to claim 15 or 16, wherein
the CCCH message carries a first request, wherein the first request indicates the first type of terminal; or
a reserved field in a media access control (MAC) subheader corresponding to the CCCH message indicates the predetermined type of terminal.

18. The method according to claim 17, wherein
a value of the reserved field is a first value, which indicates the first type of terminal; or
a value of the reserved field is a second value, which indicates the second type of terminal.

19. The method according to any one of claims 12 to 18, further comprising:
sending second information to a core network element, wherein the second information indicates that the terminal is the predetermined type of terminal.

20. The method according to claim 19, wherein the second information comprises an initial user equipment (UE) message.

21. The method according to claim 19 or 20, wherein sending the second information to the core network element comprises one of:
determining, based on the first information, that the terminal is the predetermined type of terminal, and sending, to the core network element, the second information indicating that the terminal is the predetermined type of terminal;
determining, based on the first information, that the terminal is a first type of terminal, and sending, to the core network element, the second information indicating that the terminal is the first type of terminal; or
determining, based on the first information, that the terminal is a second type of terminal, and sending, to the core network element, the second information indicating that the terminal is the second type of terminal.

22. An information processing method, performed by a network device and comprising:
receiving first information sent by a terminal, wherein the first information indicates that the terminal is a first type of terminal, the first type of terminal is different from a second type of terminal;
the first information is carried in a message 3 (MSG3) in a four-step random access procedure or a message A (MSGA) physical uplink shared channel (PUSCH) in a two-step random access procedure.

23. The method according to claim 22, wherein
in a case where a cell corresponding to the network device supports the first type of terminal and the second type of terminal, the first information comprises a first logical channel identifier (LCH ID), wherein the first LCH ID indicates the first type of terminal, the first LCH ID is different from a second LCH ID, and the second LCH ID indicates the second type of terminal; or
in a case where a cell corresponding to the network device supports the first type of terminal but does not support the second type of terminal, the first information comprises a third LCH ID, the third LCH ID indicates the first type of terminal, and the third LCH ID is identical to a second LCH ID; or
in a case where a cell corresponding to the network device supports the first type of terminal but does not support the second type of terminal, the first information comprises a third LCH ID, and a first request carried in a common control channel (CCCH) message corresponding to the third LCH ID indicates the first type of terminal; or
in a case where a cell corresponding to the network device supports the first type of terminal but does not support the second type of terminal, the first information comprises a third LCH ID, and the third LCH ID indicates the first type of terminal in a case where a value of a reserved field in a media access control (MAC) subheader corresponding to a CCCH message corresponding to the third LCH ID is a first value.

24. The method according to claim 22, wherein
the first information comprises a third LCH ID, a first request carried in a CCCH message corresponding to the third LCH ID indicates the first type of terminal, the third LCH ID is identical to a second LCH ID, and the second LCH ID indicates the second type of terminal; or
the first information comprises a third LCH ID, and the third LCH ID indicates the first type of terminal in a case where a value of a reserved field in an MAC subheader corresponding to a CCCH message corresponding to the third LCH ID is a first value.

25. The method according to claim 22, wherein
the first information comprises a first LCH ID, wherein the first LCH ID indicates the first type of terminal, the first LCH ID is different from a second LCH ID, and the second LCH ID indicates the second type of terminal.

26. An information processing apparatus, comprising:
a first sending module configured to send first information, wherein the first information indicates that the terminal is a predetermined type of terminal.

27. An information processing apparatus, comprising:
a second sending module configured to send first information to a network device, wherein the first information indicates that the terminal is a first type of terminal, the first type of terminal is different from a second type of terminal, and the first information is carried in a message 3 (MSG3) in a four-step random access procedure or a message A (MSGA) physical uplink shared channel (PUSCH) in a two-step random access procedure.

28. An information processing apparatus, comprising:
a first receiving module configured to receive first information, wherein the first information indicates that a terminal is a predetermined type of terminal.

29. An information processing apparatus, comprising:
a second receiving module configured to receive first information sent by a terminal, wherein the first information indicates that the terminal is a first type of terminal, the first type of terminal is different from a second type of terminal, and the first information is carried in a message 3 (MSG3) in a four-step random access procedure or a message A (MSGA) physical uplink shared channel (PUSCH) in a two-step random access procedure.

30. A communication device, comprising:
a transceiver;
a memory; and
an executable program stored in the memory and capable of being run by a processor, wherein the processor performs the information processing method according to any one of claims 1 to 7, or any one of claims 8 to 11, or any one of claims 12 to 21, or any one of claims 22 to 25 when running the executable program.

31. A computer storage medium having stored therein a computer executable program that, when executed by a processor, causes the information processing method according to any one of claims 1 to 7, or any one of claims 8 to 11, or any one of claims 12 to 21, or any one of claims 22 to 25 to be implemented.
